# EUROPÄISCHE PATENTANMELDUNG

(11) **EP 1 638 314 A1**
(43) Veröffentlichungstag der Anmeldung: **22.03.2006**
(21) Anmeldenummer: 04022237.4
(22) Anmeldetag: 17.09.2004
(51) Int. Cl.: H04N 5/067, H04N 5/08, H04N 7/081

(54) **Verfahren und Vorrichtung zur Zusammenfassung und gemeinsamen Übertragung mehrerer Signale in einer Kabelverbindung**

(71) Anmelder: Vantage Film GmbH, 92637 Weiden (DE)
(72) Erfinder: Schmid, Ernst, 81677 München (DE); Märtin, Peter, 92637 Weiden (DE)
(74) Vertreter: Ruschke, Hans Edvard

(57) **Zusammenfassung**

Es werden ein Verfahren und eine Vorrichtung zur Zusammenfassung und gemeinsamen Übertragung von Analog- und Impulssignalen in einer Kabelverbindung vorgeschlagen, insbesondere bei bildaufnahmentechnischen Signalen wie Video-Bild-Signal und die in einem Impuls-Signal codierte Laufgeschwindigkeit einer Filmkamera bei der Aufnahme. Dabei wird das Impulssignal auf eine feste Breite verkürzt und auf einer Trägerfrequenz, die nicht im Frequenzbereich des Analog-Signales liegt, moduliert. Zur gemeinsamen Übertragung in einem Kabel wird dieses modulierte Trägersignal dann in das frequenzbandbegrenzte Analog-Signal induktiv ein- und nach der Übertragung durch das Kabel wieder an einen Empfänger induktiv ausgekoppelt, wo die Modulation wieder decodiert wird.

## Beschreibung

### Technisches Gebiet

Die vorliegende Erfindung betrifft ein Verfahren und eine Vorrichtung zur Zusammenfassung und gemeinsamen Übertragung mehrerer Signale in einer Kabelverbindung. Insbesondere bezieht sich die Erfindung auf die Zusammenfassung und gemeinsame Übertragung von Analog- und Impuls-Signalen, die getrennten Quellen entstammen, was z.B. der Fall ist bei bildaufnahmetechnischen Signalen wie Video-Bild-Signal und die in einem Impuls-Signal codierte Laufgeschwindigkeit einer Filmkamera bei der Aufnahme.

### Hintergrund und Stand der Technik

In den letzten Jahren hat sich die Aufzeichnung, -bearbeitung und -wiedergabe von Filmen zunehmend von analogen auf digitale Medien verlagert, und aus dem Stand der Technik ist bekannt, über Filmkameras einlaufende Videos digital in Einzelbildern abzuspeichern. Das findet z.B. Anwendung bei Filmaufnahmen mit modernen Filmkameras, bei denen während der Filmaufnahme parallel zur Belichtung des Filmes das Bild des optischen Suchers auch auf eine kleine, an die Filmkamera angeschlossene, Videokamera projiziert und digital in Einzelbildern auf einem Videoaufnahmegerät gespeichert wird. Da die Filmkamera jedoch mit unterschiedlicher Filmbildgeschwindigkeit betrieben werden kann, muß bei der späteren Wiedergabe der digital gespeicherten Einzelbilder dafür Sorge getragen werden, daß der Zusammenhang mit der bei der Aufnahme tatsächlich verwendeten Filmbildgeschwindigkeit erhalten bleibt, d.h. zusätzlich zur Videoinformation muß auch die Laufgeschwindigkeit der Kamera registriert und den Videobildern zugeordnet werden. Aus diesem Grund weist der Harddisk-Recorder "PSU"® der Vantage Film GmbH Anschlüsse für ein Videokabel und ein separates Shutterpulskabel auf, das die Impulse des Verschlusses der Kamera erfaßt, wobei aus dem Shutterpuls die tatsächliche Geschwindigkeit bei der Filmaufnahme rekonstruiert werden kann. Dadurch wird es möglich, auf einem Display der "PSU" die aufgenommenen Szenen so im zeitlichen Ablauf zu sehen, wie sie bei der endgültigen Projektion des Filmes in Normalgeschwindigkeit erscheinen.

Da nun bei der Aufnahme Informationen wie Videobild und Lauf- bzw. Filmbildgeschwindigkeit fest miteinander korreliert sind, wäre es wünschenswert, derartige Signale zusammen in nur einem Kabel zu übertragen.

### Kurze Zusammenfassung der Erfindung

Es ist daher die Aufgabe der vorliegenden Erfindung, ein Verfahren und eine Vorrichtung vorzusehen, womit die Zusammenfassung und gemeinsame Übertragung von Analog- und Impuls-Signalen wie z.B. Videobild und Laufgeschwindigkeit der Kamera in nur einem Kabel ermöglicht wird.

Das wird erreicht durch ein Verfahren und eine Vorrichtung mit den Merkmalen der Ansprüche 1 bzw. 5. Gemäß der vorliegenden Erfindung wird die Filmkamera durch ein erstes Zusatzgerät ergänzt, mit dessen Hilfe die Analog- und Impuls-Signale, also Videobild-Signal und die in einem Impuls-Signal codierte Laufgeschwindigkeit der Kamera, ohne wechselseitige Störung und Beeinflussung als kombiniertes Signal in einer Kabelverbindung an ein zweites, an den Harddisk-Recorder angeschlossenes, Zusatzgerät übertragen werden, wo diese beiden Signale wieder getrennt und danach den jeweiligen Verarbeitungsstufen im Recorder zugeführt werden. Dabei muß als Übertragungskabel kein spezielles Kabel verwendet werden, sondern es kann z.B. das für Videoverbindungen übliche Standard-BNC-Kabel eingesetzt werden.

Nach der vorliegenden Erfindung ist ein Verfahren zur Zusammenfassung und gemeinsamen Übertragung mehrerer Signale, die aus verschiedenen Quellen stammen können, in einer Kabelverbindung vorgesehen, wobei mindestens ein Signal ein Analog-Signal ist und mindestens ein Signal ein Impuls-Signal, gekennzeichnet durch die folgenden Schritte:
Begrenzen des mindestens einen Analog-Signales auf eine bestimmte Bandbreite in einem ersten Filter,
Verkürzen des mindestens einen Impulssignales auf eine feste Impulsbreite,
Modulieren des verkürzten Impulssignales auf einer Trägerfrequenz, die nicht im Frequenzbereich des Analog-Signales liegt, in einem Modulator,
induktives Einkoppeln des modulierten Trägersignales aus dem Modulator in das frequenzbandbegrenzte Analog-Signal im ersten Filter,
Stabilisieren der Ausgangs-Impedanz des ersten Filters,
gemeinsames Übertragen der Signale in einem Kabel,
induktives Auskoppeln des modulierten Trägersignales aus dem Übertragungskabel an einen Empfänger in einem zweiten Filter,
Decodieren der Modulation des Trägersignales im Empfänger und
Begrenzen des Analog-Signales aus dem Übertragungskabel auf eine bestimmte Bandbreite in einem dritten Filter.

Weiterhin ist eine Vorrichtung zum Ausführen des Verfahrens nach Anspruch 1 vorgesehen. Besonders vorteilhafte Ausgestaltungen des Verfahrens und der Vorrichtung ergeben sich aus den abhängigen Ansprüchen.

### Kurze Beschreibung der Zeichnungen

- Fig. 1: zeigt in einem Schaltbild das Funktionsprinzip des erfindungsgemäßen Verfahrens;
- Fig. 2A: zeigt den Frequenzgang der unbearbeiteten Signale;
- Fig. 2B: zeigt den Frequenzgang der verwendeten Filter und
- Fig. 2C: zeigt den Frequenzgang der in der gemeinsamen Leitung übertragenen Signale.

### Detaillierte Beschreibung der bevorzugten Ausführungsformen

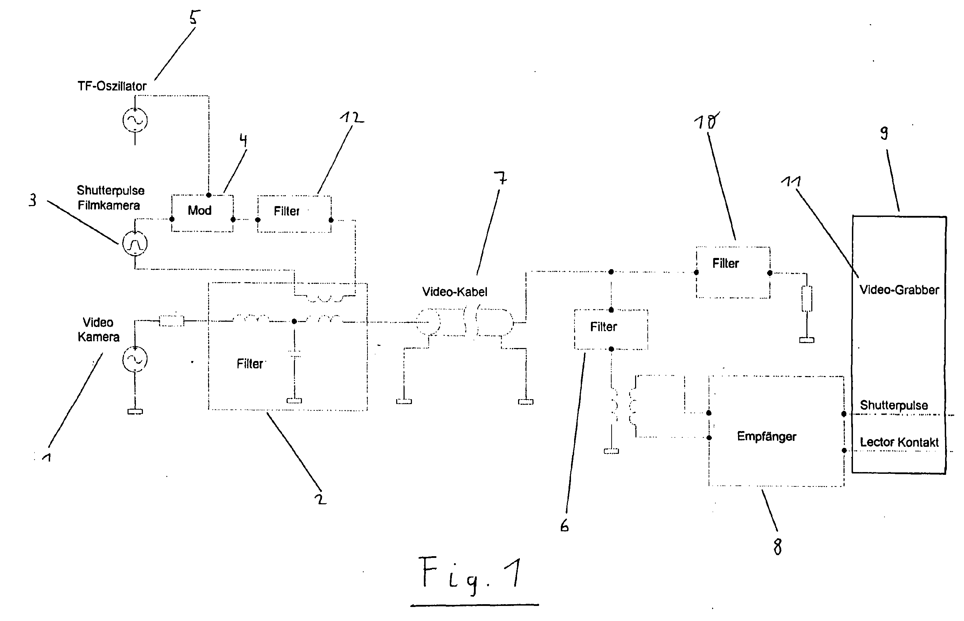

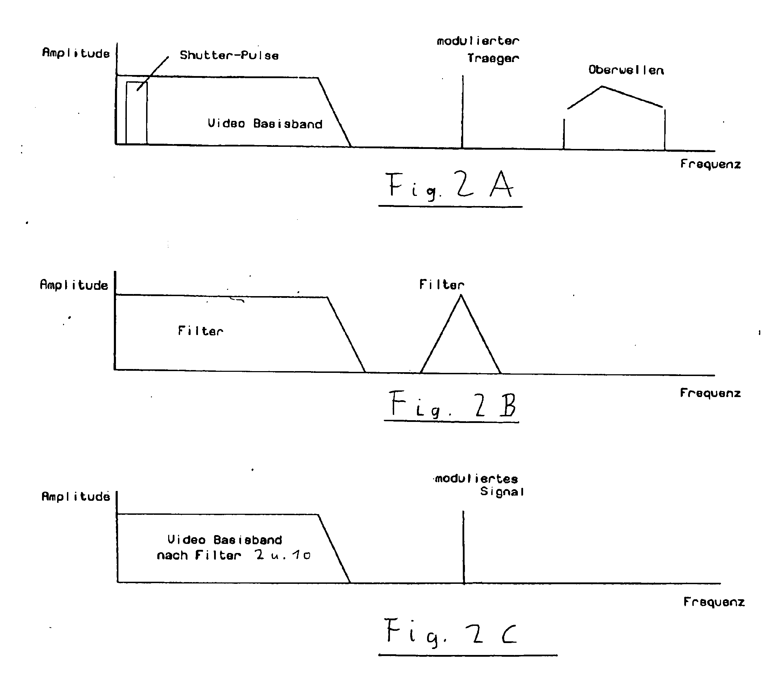

Das Funktionsprinzip des erfindungsgemäßen Verfahrens wird am Schaltbild der Fig. 1 erläutert. Eine Videokamera gibt über einen ersten Ausgang 1 ein analoges Videosignal ab, das in einem ersten Filter 2 auf eine bestimmte Bandbreite begrenzt wird - in diesem Fall auf eine systemtechnische erforderliche Bandbreite von 5,5 MHz -, um Interferenzen zu vermeiden. Weiterhin enthält der erste Filter 2 Schaltelemente (nicht gezeigt), mit denen seine Ausgangs-Impedanz stabilisiert werden kann. Diese Maßnahme ist nötig, um Qualitätsverluste zu vermeiden, wie sie durch Kabel, die eine gewisse Lönge überschreiten, entstehen. Zusätzlich ist die Filmkamera mit einem zweiten Ausgang 3 (wie etwa einer Zubehör-Anschlußbuchse) ausgerüstet, der eine von der Filmkamera erzeugte Impulsfolge abgibt, in der die Lauf- bzw. Bildgeschwindigkeit der Filmkamera als negative oder positive Impuls-Spannung codiert ist. Dabei wird pro Bild ein Shutter-Impuls mit variabler Breite erzeugt. Dieser Bildgeschwindigkeitsimpuls wird anhand von aus dem Stand der Technik bekannten Verfahren auf eine feste Impulsbreite verkürzt - in diesem Fall auf eine Breite von ca. 1 ms. Dieses verkürzte Impulssignal wird dann in einem Modulator 4 auf einer aus einem Trägerfrequenz-Oszillator 5 stammenden Trägerfrequenz moduliert, die nicht im Frequenzbereich des Analog-Signales liegt, sondern deutlich über diesem Frequenzbereich, um so Interferenzen zu vermeiden. Dann werden die auf diese Weise verarbeiteten Signale durch induktives Ein- bzw. Auskoppeln in einem Übertragungskabel zusammengeführt bzw. wieder getrennt. Dieses induktive Ein- und Auskoppeln hat sich insbesondere für solche Fälle als brauchbar erwiesen, in denen die Bezugssysteme mit ihrem gemeinsamen Potential (Masse) von Analog- und Impuls-Signal (hier also Video- und Shutterpuls) getrennt geführt werden müssen. Im ersten Filter 2 wird das modulierte Trägersignal aus dem Modulator 4 in das frequenzbandbegrenzte Video-Signal induktiv eingekoppelt,sodaß die auf diese Weise gekoppelten Signale nun in nur einem Kabel 7 zusammen übertragen werden können. Am anderen Ende dieses Übertragungskabels 7 wird das modulierte Trägersignal dann in einem zweiten Filter 6 wieder induktiv ausgekoppelt und einem Empfänger 8 zugeführt, wo die Modulation des Trägersignales wieder decodiert wird. Das auf diese Weise zurückerhaltene Shutterpuls-Signal wird dann z.B. zur Berechnung der Bildfrequenz an einen Harddisk-Recorder 9 weitergeleitet. In einem dritten Filter 10 wird das analoge Videosignal wiederum auf die schon oben erwähnte Bandbreite begrenzt, um Interferenzen auszuschließen, die z.B. zwischen einer Videograbber-Karte 11 des Harddisk-Recorders 9, der das Videosignal zugeführt wird, und der Trägerfrequenz auftreten könnten.

In Ergänzung zum obigen Verfahren können in einem vierten Filter 12 die Oberwellen der Trägerfrequenz reduziert werden, bevor das modulierte Trägersignal in das frequenzbandbegrenzte Video-Signal eingekoppelt wird.

Der Unterschied in den Frequenzgängen der unbearbeiteten und der bearbeiteten Signale ergibt sich aus Fig. 2A und 2C. Der Frequenzgang der unbearbeiteten Analog- und Impuls-Signale ist Fig. 2A zu entnehmen. Wie zu sehen, liegen die Frequenzgänge der unbearbeiteten Analog- und Impulssignale aufeinander, daneben liegen der modulierte Träger sowie Oberwellen. Fig. 2B zeigt die Frequenzgänge der ersten, zweiten, dritten und vierten Filter 2, 7, 10 und 12. Die Frequenzgänge der mit diesen Filtern bearbeiteten und gemeinsam über das Kabel übertragenen Analog- und Impuls-Signale sind schleßlich in Fig. 2C dargestellt. Wie zu sehen, ist das Shuttersignal auf den Träger moduliert; weiterhin sind die Oberwellen durch den Einsatz des vierten Filters 12 verschwunden bzw. reduziert.

## Patentansprüche

1. Verfahren zur Zusammenfassung und gemeinsamen Übertragung mehrerer Signale, die aus verschiedenen Quellen stammen können, in einer Kabelverbindung 7, wobei mindestens ein Signal ein Analog-Signal ist und mindestens ein Signal ein Impuls-Signal, **gekennzeichnet durch** die folgenden Schritte:
Begrenzen des mindestens einen Analog-Signales auf eine bestimmte Bandbreite in einem ersten Filter 2,
Verkürzen des mindestens einen Impulssignales auf eine feste Impulsbreite,
Modulieren des verkürzten Impulssignales auf einer Trägerfrequenz, die nicht im Frequenzbereich des Analog-Signales liegt, in einem Modulator 4,
induktives Einkoppeln des modulierten Trägersignales aus dem Modulator 4 in das frequenzbandbegrenzte Analog-Signal im ersten Filter 2,
Stabilisieren der Ausgangs-Impedanz des ersten Filters 2,
gemeinsame Übertragung der Signale in einem Kabel 7,
induktives Auskoppeln des modulierten Trägersignales aus dem Übertragungskabel an einen Empfänger 8 in einem zweiten Filter 6,
Decodieren der Modulation des Trägersignales im Empfänger 8 und
Begrenzen des Analog-Signales aus dem Übertragungskabel 7 auf eine bestimmte Bandbreite in einem dritten Filter 10.

2. Verfahren nach Anspruch 1, **dadurch gekennzeichnet, daß** die Oberwellen der Trägerfrequenz in einem vierten Filter 12 reduziert werden, bevor das modulierte Trägersignal in das frequenzbandbegrenzte Analog-Signal eingekoppelt wird.

3. Verfahren nach einem der vorangegangenen Ansprüche, **dadurch gekennzeichnet, daß** das Analog-Signal ein Video-Signal einer Filmkamera 1 ist und das Impuls-Signal eine negative Impulsspannung, in der die Bildgeschwindigkeit der Filmkamera 1 codiert enthalten ist.

4. Verfahren nach Anspruch 3, **dadurch gekennzeichnet, daß** das Videosignal auf eine Bandbreite von 5,5 MHz begrenzt und die Impulsspannung auf eine Impulsbreite von ca. 1 ms verkürzt wird.

5. Vorrichtung zur Zusammenfassung und gemeinsamen Übertragung von Analog- und Impuls-Signalen, die aus verschiedenen Quellen stammen können, in einer Kabelverbindung 7, wobei ein Signal ein Analog-Signal ist und ein Signal ein Impuls-Signal, **gekennzeichnet durch**
eine Einrichtung zum Verkürzen des Impulssignales auf eine feste Impulsbreite,
einen Modulator 4 zum Modulieren des verkürzten Impulssignales auf einer Trägerfrequenz, die nicht im Frequenzbereich des Analog-Signales liegt,
einen ersten Filter 2 zum Begrenzen des Analog-Signales auf eine bestimmte Bandbreite und zum induktiven Einkoppeln des modulierten Trägersignales aus dem Modulator 4 in das frequenzbandbegrenzte Analog-Signal zur gemeinsamen Übertragung in einem Kabel 7, wobei die Ausgangs-Impedanz des ersten Filters 2 stabilisiert werden kann,
einen zweiten Filter 6 zum induktiven Auskoppeln des modulierten Trägersignales aus dem Übertragungskabel,
einen Empfänger 8 zum Decodieren der Modulation des Trägersignales und
einen dritten Filter 10 zum Begrenzen des Analog-Signales aus dem Übertragungskabel 7 auf eine bestimmte Bandbreite.

6. Vorrichtung nach Anspruch 5, weiterhin **gekennzeichnet durch** einen vierten Filter 12 zum Reduzieren der Oberwellen der Trägerfrequenz.
